Europäisches Patentamt

European Patent Office

Office européen des brevets

(19)

(11) Veröffentlichungsnummer : **0 277 938 B1**

# (12) EUROPÄISCHE PATENTSCHRIFT

(45) Veröffentlichungstag der Patentschrift :
**16.10.91 Patentblatt 91/42**

(51) Int. Cl.⁵ : **F04C 23/02, F16D 43/10**

(21) Anmeldenummer : **88890024.8**

(22) Anmeldetag : **03.02.88**

(54) Verdichteraggregat mit einem Schraubenverdichter.

(30) Priorität : **05.02.87 AT 237/87**

(43) Veröffentlichungstag der Anmeldung :
**10.08.88 Patentblatt 88/32**

(45) Bekanntmachung des Hinweises auf die
Patenterteilung :
**16.10.91 Patentblatt 91/42**

(84) Benannte Vertragsstaaten :
**BE CH DE ES FR GB IT LI NL SE**

(56) Entgegenhaltungen :
**AT-B- 191 065
FR-A- 1 088 627
FR-A- 1 219 702**

(56) Entgegenhaltungen :
**AUGUST SCHALITZ "Kupplungs- atlas", 4.
Auflage, 1975 A.G.T-VERLAG GEORG THUM -
D-7140 Ludwigsburg / Württ. Seiten 190-191
ORTLINGHAUS-KATALOG
"Lamellen,Kupplungen, Antriebe", K87, Jänner 1987 ORTLINGHAUS-WERKE GmbH.
D-5632 Wermebkirchen, Postfach 1440**

(73) Patentinhaber : **HOERBIGER VENTILWERKE
AKTIENGESELLSCHAFT
Braunhubergasse 23
A-1110 Wien (AT)**

(72) Erfinder : **Hrabal, Hans
Waidhausenstrasse 28
A-1140 Wien (AT)**

(74) Vertreter : **Klein, Adam, Dipl.Ing.
Fasangasse 49
A-1030 Wien (AT)**

## Beschreibung

Die Erfindung bezieht sich auf ein Verdichteraggregat mit einem Schraubenverdichter und einem Antriebsmotor, der mit dem Verdichter über eine automatische Kupplung antriebsverbunden ist durch die die Antriebs verbindung mit dem Schraubenverdichter lösbar ist. Ein solches Aggregat ist bekannt aus der Druckschrift AT-B-191065.

Beim Verdichten von Luft oder anderen Gasen ist es bekanntlich erforderlich, die Fördermenge des die Verdichtungsarbeit leistenden Verdichteraggregats in einer bestimmten Betriebszeit dem jeweiligen Bedarf an verdichtetem Medium entsprechend zu verändern. Für Kolbenverdichter sind verschiedene stufenlose Regelungsverfahren bekannt, die meist durch Eingriff in die Arbeitsventile die Fördermenge des Verdichters dem jeweiligen Bedarf genau anpassen. Bei Schraubenverdichtern, die keine den Arbeitsventilen des Kolbenverdichters vergleichbare Steuereinrichtungen besitzen, erfolgt die Regelung der Fördermenge entweder durch Drosseln der Ansaugleitung oder durch zeitweises Stillsetzen des Verdichters durch Abstellen der Antriebsmaschine (Aussetzregelung). Die Regelung durch Drosseln der Saugleitung verursacht Energieverluste, weil der Verdichter samt der Antriebsmaschine auch dann weiterläuft, wenn keine Förderung erfolgt. Ebenso ist das Abschalten des Verdichters mit Verlusten behaftet, wenn nicht gleichzeitig auch die Antriebsmaschine stillgesetzt wird.

Es sind auch für Schraubenverdichter Regelungsverfahren bekannt, bei denen der Antriebsmotor samt dem Schraubenverdichter stillgesetzt wird, sobald in dem vom Verdichter versorgten Netz oder in einem Druckbehälter der gewünschte Druck erreicht ist. Dabei ergeben sich jedoch Probleme beim Wiederanfahren des Verdichteraggregats, sobald eine neuerliche Förderung zur Versorgung des Netzes verlangt wird. Bei den Schraubenverdichtern ist zwar im Stillstand kein besonderes Lastmoment wirksam, weil es sich um einen Verdichter mit sogenannter innerer Undichtheit handelt, wobei das Lastmoment von der Drehzahl abhängig ist. Trotzdem steigt das Lastmoment mit wachsender Drehzahl rasch an, insbesondere wenn der Schraubenverdichter gegen den vollen Verdichtungsdruck anzufahren ist, so daß die Gefahr einer thermischen Überlastung des Antriebsmotors besteht, jedenfalls aber eine verhältnismäßig lange Anlaufzeit auftritt. Ein rechtzeitiges Wiedereinsetzen der Förderung ist bei dieser Regelung nicht gewährleistet. Dieser Nachteil kann nur durch aufwendige technische Einrichtungen gemildert werden. Es ist deshalb in aller Regel eine zusätzliche Saugdrosselregelung vorgesehen und es sind auch Vorkehrungen zur Druckentlastung des Schraubenverdichters im Stillstand getroffen, so daß ein druckloses Anfahren möglich ist. Diese technischen Einrichtungen und Vorkehrungen, zu denen noch die notwendigen Steuerungen hinzukommen, bedeuten einen erheblichen zusätzlichen Aufwand.

Eine weitere Schwierigkeit bei der Aussetzregelung von Verdichteraggregaten ergibt sich daraus, daß die Antriebsmotoren beim Anlaufen einen höheren Strom aufnehmen als nach Erreichen der Nenndrehzahl und ihres vollen Drehmomentes. Auch bei druckentlastetem Anlauf des Schraubenverdichters kann es daher vorkommen, daß der Antriebsmotor bei kurzen Betriebspausen, die rasch aufeinanderfolgen, also bei häufigem Anfahren innerhalb einer bestimmten Zeitspanne, thermisch überlastet wird. Die Motorenhersteller schreiben daher häufig vor, wie viele Anläufe in der Zeiteinheit maximal zulässig sind, die dann nicht überschritten werden dürfen.

Bei Verwendung einer Kupplung zwischen dem Antriebsmotor und dem Schraubenverdichter sind aufwendige Steuereinrichtungen für das Ein- und Ausrücken der Kupplung erforderlich. Beim Anlaufen des Verdichteraggregats muß sichergestellt sein, daß die Kupplung gelöst ist, und beim Erreichen einer bestimmten Drehzahl muß die Kupplung eingerückt werden. Beim Stillsetzen des Aggregats muß die Kupplung zur rechten Zeit ausgerückt werden. Wenn die Steuereinrichtung versagt oder ungenau arbeitet, z.B. aufgrund einer unrichtigen Justierung, besteht auch hier die Gefahr von thermischen Überlastungen des Antriebsmotors.

Der Erfindung liegt die Aufgabe zugrunde, die bisher bekannten Verdichteraggregate mit Schraubenverdichtern so zu verbessern, daß sie in der Zeiteinheit häufig stillgesetzt und wieder angefahren werden können, ohne daß der Antriebsmotor thermisch überlastet wird und ohne daß aufwendige Schaltungs- und Steuerungseinrichtungen dazu notwendig sind.

Mit der Erfindung wird diese Aufgabe dadurch gelöst, daß zur Regelung der Fördermenge des Schraubenverdichters durch zeitweilig Stillsetzen des Verdichteraggregates (Aussetzregelung) der Antriebsmotor ein abschaltbarer Elektromotor ist, der mit dem Schraubenverdichter über eine an sich bekannte Fliehkraftkupplung antriebsverbunden ist die einem treibenden und einem angetrieben Kupplungsteil aufweist, wobei zwischen den beiden Kupplungsteilen als Reibscheibe ausgebildete Lamellen nebeneinander angeordnet sind, von denen Innenlamellen mit dem treibenden Kupplungsteil und abwechselnd mit den Innenlamellen angeordnete Außenlamellen mit dem angetriebenen Kupplungsteil mitdrehbar jedoch axial verschiebbar verbunden sind, und wobei eine Schaltkammer vorgesehen ist, die eine gegen die Reibscheiben verschiebbare Druckscheibe aufweist, die durch Fliehgewichte in der Schaltkammer gegen die Reibscheiben verstellbar ist.

Fliekraftkupplungen sind schon in verschiedenen Ausführungen bekannt, z.B. aus der AT-PS 162191.

Diese Kupplungen werden verwendet, um beim Antrieb von sich drehenden Maschinenteilen ein zeitlich verzögertes Einkuppeln zu bewirken. Der Grund für die Verwendung einer Fliehkraftkupplung besteht in aller Regel darin, ein verhältnismäßig großes Anlaufdrehmoment der angetriebenen Maschine zu überwinden. Da die Reibscheiben dabei verhältnismäßig lange aufeinander gleiten, unterliegen sie einem hohen Verschleiß, so daß die Fliehkraftkupplung nur eine begrenzte Lebensdauer für eine bestimmte Anzahl von Schaltungen aufweist. Im Hinblick auf diesen Sachverhalt sind Fliehkraftkupplungen, obwohl sie schon lange bekannt sind, und das auch für den Antrieb und bei der Regelung von Kolben verdichtern, (siche z.B. A. Schalitz, kupplungs-Atlas, 4. Auflage, Ludwigsburg 1975, Fig 9.1-52) für Schraubenverdichter nicht angewendet worden. In überraschender Weise hat sich jetzt ergeben, daß bei der Regelung der Fördermenge von Schraubenverdichtern und vergleichbaren anderen Verdichtern mit innerer Undichtheit, bei deren Anlaufen aus dem Stillstand nicht sofort das volle Lastmoment zu überwinden ist, Fliehkraftkupplungen mit besonderem Vorteil angewendet werden können. Durch gezielte konstruktive Ausgestaltung der Fliehkraftkupplung unter Berücksichtigung der spezifischen Eigenheiten derselben ergibt sich dabei eine einfache Gesamtanordnung des Verdichteraggregats, das durch praktisch beliebig oftes Stillsetzen geregelt werden kann.

Bei der erfindungsgemäßen Ausgestaltung des Verdichteraggregats bewirkt die Fliehkraftkupplung ohne zusätzlichen technischen Aufwand ein selbsttätiges An- und Abkuppeln des Schraubenverdichters an den Antriebsmotor in Abhängigkeit von der Drehzahl. Es ist dabei weder eine Druckentlastung des Schraubenverdichters noch eine Drosselung der Ansaugleitung oder ein sonstiger Eingriff in den Verdichter erforderlich. Beim Anlaufen wird der Schraubenverdichter erst an den Antriebsmotor angekuppelt, wenn dieser zumindest annähernd seine Nenndrehzahl und damit ein ausreichendes Drehmoment erreicht hat, um den Schraubenverdichter auch gegen den vollen Mediumsdruck rasch auf die zur Förderung erforderliche Drehzahl zu bringen. Da dieser Anlaufvorgang schnell vor sich geht und die Fliekraftkupplung nur kurzzeitig rutscht, ist der Kupplungsverschleiß gering, so daß die Lebensdauer der Kupplung ausreichend groß ist. Beim Abschalten des Antriebsmotors wird der Schraubenverdichter ebenso schnell abgekuppelt und bleibt stehen, während der Antriebsmotor auslaufen kann. Da der Anlauf des erfindungsgemäßen Verdichteraggregats rasch vor sich geht, ohne daß schon bei kleinen Drehzahlen ein großes Lastmoment zu überwinden ist, führt auch ein häufiges Stillsetzen in der Zeiteinheit zu keiner thermischen Überlastung des Antriebsmotors. Insgesamt schafft somit die Erfindung eine technisch einfache selbsttätig arbeitende und aufgrund fehlender Energieverluste zugleich wirtschaftliche Möglichkeit, die Fördermenge von Schraubenverdichtern dem jeweiligen Bedarf entsprechend zu regeln.

In weiterer Ausgestaltung der Erfindung kann die Druckscheibe der Fliehkraftkupplung mit Rückzugfedern versehen sein, die in Richtung von den Reibscheiben weg wirken. Diese Rückzugfedern verhindern nicht nur, daß die Druckscheibe die verschiedenen Reibscheiben schon beim Anlaufen zu früh aneinander preßt und so unnötigen Verschleiß verursacht, sondern es wird durch diese Rückzugfedern insbesondere ein rasches Ausrücken der Fliehkraftkupplung beim Abschalten des Antriebsmotors sichergestellt, so daß der weiterhin unter dem Mediumsdruck stehende Schraubenverdichter verhältnismäßig abrupt stehen bleiben kann, während der Antriebsmotor ausläuft. Durch die Rückzugfedern wird somit die Lebensdauer der Reibscheiben verlängert.

Eine weitere Verbesserung der erfindungsgemäß verwendeten Fliehkraftkupplung kann dadurch erzielt werden, daß der Druckscheibe eine mit dem treibenden Kupplungsteil verbundene Innenlamelle benachbart ist, die durch wenigstens eine koaxial zu den Reibscheiben angeordnete Ringfeder gegen die Druckscheibe gedrückt ist. Die Ringfeder stellt eine wirksame reibschlüssige Verbindung zwischen dem treibenden Kupplungsteil und der Druckscheibe der Schaltkammer sicher, auch wenn sich die Kupplung noch im Stillstand befindet. Es handelt sich also um eine Beschleunigungshilfe für die Schaltkammer, wodurch die Schaltzeit der Fliehkraftkupplung verkürzt und damit die Lebensdauer der Reibscheiben vergrößert wird, weil die Reibscheiben der kürzeren Schaltzeit entsprechend auch kürzer aufeinander reiben.

Die Ringfeder ist zweckmäßig an einem in einer Ringnut des treibenden Kupplungsteils verankerten Sprengring abgestützt. Dies ergibt nicht nur eine einfache konstruktive Ausgestaltung, sondern es wird auch verhindert, daß die Ringfeder auf andere Reibscheiben ungünstig einwirkt. Um Überlastungen der Ringfeder zu vermeiden und die erforderliche Federkraft einfach justieren zu können, besteht die Ringfeder vorteilhaft aus einem Federpaket aus gewölbten Federringen. Es können beliebig gewölbte Federringe verwendet werden, z.B. wellenförmige Ringe oder nach eine Zylinderfläche gewölbte Ringfedern. Auch tellerförmige Federn sind denkbar. Zwischen den wellenförmig oder auf andere Weise gewölbten Ringfedern können auch ebene Zwischenringe angeordnet sein.

Eine weitere Verbesserung kann erfindungsgemäß dadurch erreicht werden, daß die Innenlamellen mit axial durchgehenden Lüftungsschlitzen versehen sind, von denen radiale Lüftungsbohrungen nach außen geführt sind. Diese Lüftungsbohrungen, die zweckmäßig sternförmig in den Lamellen verlaufen, sind von Luft durchströmt und stellen so eine Kühlung der Lamellen sicher, so daß auch bei häufigem Stillsetzen des Verdichteraggregats eine thermische Überlastung der Fliehkraftkupplung vermieden wird. Es ist auch denkbar, durch die Lüftungsschlitze und die Lüftungsbohrungen ein anderes Kühlmittel als Luft zwangsweise umlaufen zu lassen.

Die Lüftungsschlitze in den Innenlamellen können gemäß einer weiteren Verbesserung der Erfindung mit im angetriebenen Kupplungsteil vorgesehen Lüftungskanälen in Verbindung stehen, die in kleinerem Radialabstand von der Rotationsachse der Fliehkraftkupplung ins Freie münden als die radialen Lüftungsbohrungen in den Innenlamellen. Dadurch wird wie bei einem Radialgebläse ein zwangsweiser Luftdurchfluß durch die Lüftungsbohrungen erzielt. Beim Umlaufen der Kupplung wird die Luft aufgrund der Fliehkraft durch die Lüftungsbohrungen radial nach außen gefördert, wobei durch die Lüftungskanäle Frischluft angesaugt wird. Dadurch ist eine selbsttätige Kühlung ohne besonderen Aufwand verwirklicht.

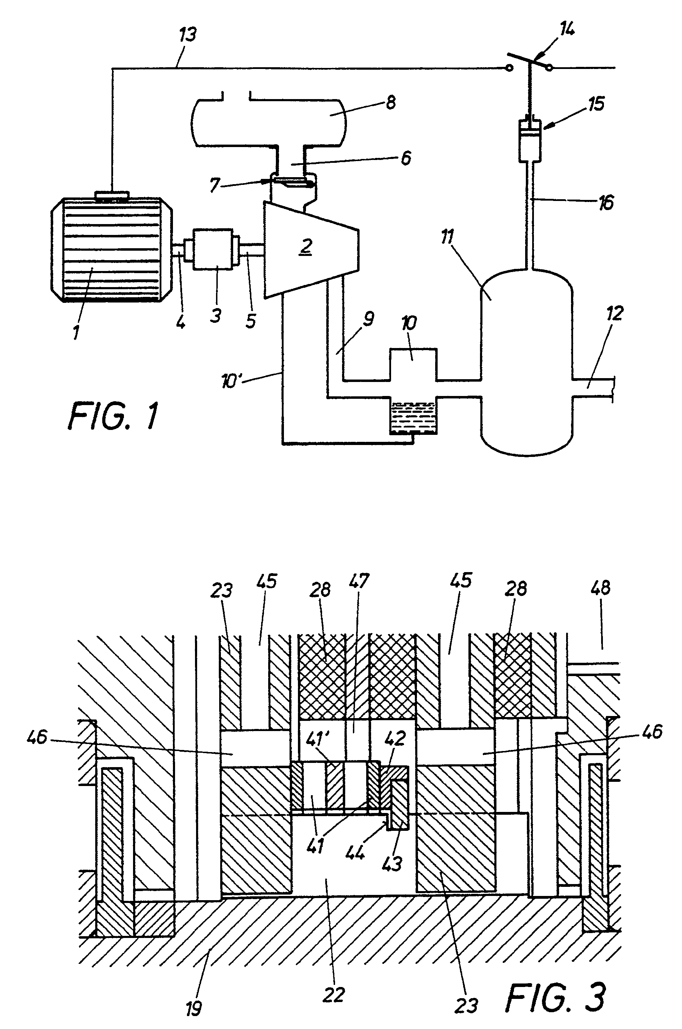

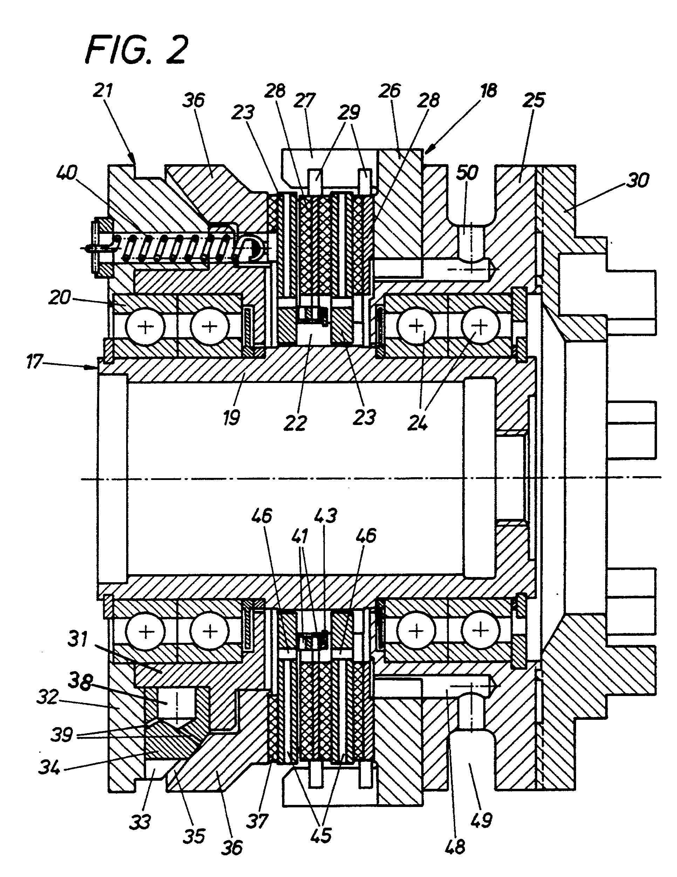

In den Zeichnungen ist ein Ausführungsbeispiel der Erfindung dargestellt. Fig. 1 zeigt eine schematische Darstellung einer Verdichteranlage mit dem erfindungsgemäßen Verdichteraggregat, Fig. 2 einen axialen Mittelschnitt durch die verwendete Fliehkraftkupplung und Fig. 3 ein vergrößertes Detail der Fliehkraftkupplung nach Fig. 2.

Gemäß Fig. 1 besteht das Verdichteraggregat aus einem Antriebsmotor 1 und einem Schraubenverdichter 2, die über eine Fliehkraftkupplung 3 miteinander antriebsverbunden sind. Die Fliehkraftkupplung 3 ist zwischen eine vom Antriebsmotor 1 kommende Antriebswelle 4 und eine zum Schraubenverdichter 2 führende Antriebswelle 5 eingeschaltet. An Stelle dieser achsgleichen Wellenverbindung kann auch ein Riementrieb, vorzugsweise mit Keilriemen, vorgesehen sein. Die Riemenscheibe kann in die Fliehkraftkupplung integriert sein. Der Schraubenverdichter 2 ist mit einer Saugleitung 6 versehen, in die ein als Klappe ausgebildetes Rückschlagventil 7 und ein Luftfilter 8 eingebaut sind. Vom Schraubenverdichter 2 führt eine Druckleitung 9, in die ein Ölabscheider 10 eingebaut ist, zu einem Druckbehälter 11. Von diesem geht eine Verbraucherleitung 12 aus. Die Stromzuführung zum Antriebsmotor 1 ist über einen elektrischen Schalter 14 geführt, der durch einen Druckschalter 15 betätigt ist, welcher über eine Steuerleitung 16 mit dem Druckbehälter 11 in Verbindung steht.

Der Aufbau der Fliehkraftkupplung 2 ist aus Fig. 2 zu entnehmen. Sie besteht aus einem treibenden Kupplungsteil 17 und aus einem angetriebenen Kupplungsteil 18. Der treibende Kupplungsteil 17 ist als Hohlwelle 19 ausgebildet, die auf der Antriebswelle 4 des Motors 2 sitzt und auf der über zwei nebeneinander eingebaute Kugellager 20 eine Schaltkammer 21 frei drehbar gelagert ist. In ihrem mittleren Abschnitt ist die Hohlwelle 19 mit radial vorspringenden, zahnradartigen Längsrippen 22 versehen, auf denen als Innenlamellen 23 bezeichnete Reibscheiben mitdrehbar, jedoch in Achsrichtung verschiebbar verankert sind.

Der angetriebene Kupplungsteil 18 ist gleichfalls über Kugellager 24 auf der Hohlwelle 19 des treibenden Kupplungsteils 17 drehbar gelagert. Er besteht aus einer unmittelbar auf den Kugellagern 24 sitzenden Nabe 25, an der ein Stützring 26 befestigt ist, der an seinem Außenumfang mit Axialrippen 27 über die Reibscheiben ragt. In diese Axialrippen 27 greifen als Außenlamellen 28 bezeichnete Reibscheiben mit einer an ihrem Außenrand vorgesehenen Verzahnung 29 mitdrehbar aber axial verschiebbar ein. Auf der anderen Seite der Nabe 25 ist eine Klauenscheibe 30 befestigt, welche die Antriebsverbindung mit der zum Schraubenverdichter 2 führenden Abtriebswelle 5 herstellt.

Die Schaltkammer 21 sitzt mit einem Nabenring 31 auf den beiden Kugellagern 20. Am Nabenring 31 ist ein Halterung 32 befestigt, der mit über seinen Umfang verteilten, radial nach außen offenen Kammern 33 versehen ist, in denen Fliehgewichte 34 radial verschiebbar gelagert sind. Die Fliehgewichte 34 stützen sich an einer Schrägfläche 35 einer Druckscheibe 36 ab, die mit einem Reibbelag 37 an einer Innenlamelle 23 anliegt. Die Fliehgewichte 34 haben einen nach innen zu offenen Hohlraum 38, in dem sich Schmiermittel, z.B. Schmierfett, befindet, das beim Umlauf der Schaltkammer 21 aufgrund der Fliehkraft durch kleine Bohrungen 39 auf die Schrägfläche 35 der Druckscheibe 36 und an die Innenfläche des Halteringes 32 gebracht wird. Im Haltering 32 sind außerdem Rückzugfedern 40 verankert, die an der Druckscheibe 36 angreifen und diese in Richtung von den Reibscheiben 23,28 weg belasten. Die Zugfedern 40 drücken auch die Druckscheibe 36 mit der Schrägfläche 35 an die Fliehgewichte 34 an und wirken so der bei rotierender Schaltkammer 21 von den Fliehgewichten 34 ausgeübten Fliehkraft entgegen.

Die der Druckscheibe 36 benachbarte Innenlamelle 23 ist durch Ringfedern 41 gegen die Druckscheibe 36 belastet. Die Innenlamelle 23 wird so dauernd an den Reibbelag 37 der Druckscheibe 36 angedrückt. Die Ringfedern 41 sind koaxial zur Hohlwelle 19 des treibenden Kupplungsteils 17 auf den Längsrippen 22 der Hohlwelle 19 angeordnet. Wie deutlich aus Fig. 3 zu erkennen ist, liegen die Ringfedern 41 auf ihrer der Innenlamelle 23 abgewendeten Seite an einem Stützring 42 an, der durch einen Sprengring 43 gehalten ist, der in eine Ringnut 44 in den Längsrippen 22 eingreift. Im Ausführungsbeispiel sind zwei wellenförmig gewölbte Ringfedern 41 mit einem dazwischen angeordneten Zwischenring 41' vorgesehen. Es können aber auch andere Ringfedern in beliebiger Anzahl verwendet werden, ebenso wäre für den gleichen Zweck eine Schraubenfeder denkbar.

Um eine zu große Erwärmung der Reibscheiben zu verhindern, sind die Innenlamellen 23 mit sternförmig angeordneten radial verlaufenden Lüftungsbohrungen 45 versehen. Die Lüftungsbohrungen 45 gehen von Lüftungsschlitzen 46 aus, die kreisbogenförmig verlaufen und die Innenlamellen 23 in der Nähe ihres inneren Randes durchsetzen. Über den Hohlraum 47 zwischen dem Außenrand der Ringfedern 41 und dem Innenrand der Außenlamellen 28 stehen die Lüftungsschlitze 46 untereinander und mit Lüftungskanälen 48 in Verbindung, die gemäß Fig. 2 in eine nach außen offene Umfangsnut 49 in der Nabe 25 des angetriebenen Kupplungsteils 18 münden. Die Mündungsöffnungen 50 liegen auf einem kleineren Teilkreis als die Austrittsöffnungen der Lüftungsbohrungen 45 in den Innenlamellen 23. Die Mündungsöffnungen 50 dienen deshalb als Ansaugöffnungen für die Kühlluft.

Im Ausführungsbeispiel nach Fig. 1 ist der elektrische Schalter 14 offen dargestellt, der Antriebsmotor 1 ist daher stromlos und das Verdichteraggregat befindet sich im Stillstand. Sobald der Schalter 14 geschlossen wird, läuft der Antriebsmotor 1 an. Die Fliehkraftkupplung 3, deren Fliehgewichte 34 sich in der in Fig. 2 dargestellten Lage befinden, ist dabei zunächst ausgekuppelt. Der treibende Kupplungsteil 17 dreht sich mit dem Antriebsmotor mit und setzt auch die Innenlamellen 23 in Rotation. Diese befinden sich aber außer Eingriff den Außenlamellen 28, so daß der angetriebene Kupplungsteil 18 zunächst stehen bleibt, ebenso der Schraubenverdichter 2. Die rotierende Hohlwelle 19 übt über die Reibungskraft in den Kugellagern 20 eine Mitnahmekraft auf die Schaltkammer 21 aus. Diese Lagerreibung ist jedoch verhältnismäßig klein. Zusätzlich dazu drücken die Ringfedern 41 die der Schaltkammer 21 benachbarte Innenlamelle 23 an den Reibbelag 37 der Druckscheibe 36 an. Dadurch wird bewirkt, daß die Schaltkammer 21 verhältnismäßig rasch in Rotation versetzt wird. Die auf die Fliehgewichte 34 wirkende Fliehkraft wird dabei immer größer, bis die Rückzugkraft der Rückzugfedern 40 überwunden wird. Sobald dies der Fall ist, wandern die Fliehgewichte 34 nach außen und verschieben die Druckscheibe 36 gegen den angetriebenen Kupplungsteil 18, wodurch die aus Innenlamellen 23 und Außenlamellen 28 bestehenden Reibscheiben fest aneinander angepreßt werden. Die Fliehkraftkupplung wird so verhältnismäßig rasch eingerückt, ohne daß die Reibscheiben länger aufeinander gleiten.

Beim Einrücken der Fliehkraftkupplung 3 wird der Rotor des Schraubenverdichters 2 über die Abtriebswelle 5 in Drehung versetzt. Da die Schraubenverdichter zu den Verdichtern mit innerer Undichtheit gehören, kann der Rotor des Schraubenverdichters 2 verhältnismäßig leicht und mit geringem Drehmoment aus seiner Ruhelage herausbewegt werden. Das Lastmoment steigt mit wachsender Rotordrehzahl schnell an. Die Fliehkraftkupplung 3 kuppelt erst ein, bis der Antriebsmotor 1 wenigstens annähernd, vorzugsweise seine volle Nenndrehzahl und damit ein ausreichend großes Drehmoment erreicht hat, um den Rotor des Schraubenverdichters 2 rasch zu beschleunigen und auch bei vorhandenem vollen Mediumsdruck auf seine Nenndrehzahl zu bringen. Das Rückschlagventil 7 in der Saugleitung 6 hat sich schon während des Anlaufvorganges geöffnet, so daß durch den Filter 8 Medium angesaugt wird. Dieses wird über die Druckleitung 9 zunächst in den Ölabscheider 10 gefördert, aus dem das abgeschiedene Schmiermittel über eine Leitung 10' zur Schmierung des Schraubenverdichters 2 zu diesem zurückgeführt wird. Die verdichtete Luft oder das verdichtete Gas gelangt sodann in den Druckbehälter 11, in welchem in Abhängigkeit von der Entnahme durch die Verbraucherleitung 12 ein Druck aufgebaut wird.

Sobald ein vorgewählter Höchstdruck im Durckbehälter 11 erreicht ist, spricht der Druckschalter 15 an und bringt den elektrischen Schalter 14 wieder in die in Fig. 1 dargestellte geöffnete Stellung. Der Antriebsmotor 1 verliert dadurch sein Antriebsmoment und wird zunächst gemeinsam mit dem Schraubenverdichter 2 rasch langsamer. Beim Unterschreiten einer vorbestimmten Drehzahl werden die Fliehgewichte 34 unter Einwirkung der Rückzugfedern 40 in die in Fig. 2 gezeigte Stellung zurückbewegt, wobei gleichzeitig die Druckscheibe 36 von den Reibscheiben 23,28 zurückgezogen wird. Die Antriebsverbindung zwischen dem Antriebsmotor 1 und dem Schraubenverdichter 2 wird dadurch abrupt gelöst, der Schraubenverdichter 2 bleibt rasch stehen, wobei sich das Rückschlagventil 7 schließt, und der Antriebsmotor 1 läuft aus. Sobald der Druck im Druckbehälter 11 unter einen bestimmten, beliebig festgelegten Wert fällt, wird der elektrische Schalter 14 wieder geschlossen und ein neuer Arbeitszyklus eingeleitet.

Die zwischen dem Antriebsmotor 1 und dem Schraubenverdichter 2 eingeschaltete Fliehkraftkupplung 3 ermöglicht ein Anlaufen des Verdichteraggregats gegen den vollen Förderdruck im Behälter 11. Es ist also nicht notwendig, den Schraubenverdichter 2 vor dem Anlaufen zu entlüften. Auch andere Steuerungsvorkehrungen sind weder für den Schraubenverdichter 2 noch für die Fliehkraftkupplung 3 erforderlich, die völlig selbsttätig jeweils zum richtigen Zeitpunkt ein- und auskuppelt. Da der Antriebsmotor 1 erst mit dem Antriebsmoment des Schraubenverdichters 2 belastet wird, sobald er angelaufen ist, besitzt er ein ausreichend großes Drehmoment, so daß eine thermische Überlastung des Antriebsmotors 1 durch die Fliehkraftkupplung 3 vermieden wird. Die Verdichteranlage kann deshalb in kurzen Zeitabständen immer wieder angefahren und stillgesetzt werden, ohne daß der Antriebsmotor 1 Schaden erleidet.

Da sowohl das Einkuppeln als auch das Auskuppeln aufgrund der spezifischen Ausbildung der beschriebenen Fliehkraftkupplung rasch vor sich geht, werden auch die Reibscheiben 23,28 nur kurzzeitig belastet, so daß die Fliehkraftkupplung 3 nur einem kleinen Verschleiß unterliegt. Diese kurze Rutschzeit der Kupplung und das verhältnismäßig große Beschleunigungsmoment werden insbesondere durch die Ringfedern 41 bewirkt, die die Innenlamelle 23 über den Reibbelag 37 an die Druckscheibe 36 anpressen, so daß die Schaltkammer 21 beim Anlaufen des Antriebsmotors 1 schnell mitgenommen und in Rotation versetzt wird. Die Rückzugfedern 40 unterstützen diese Wirkungweise. Die vorgesehene Kühlung der Innenlamellen 23 bewirkt eine ständige Luftzirkulation. Die Luft tritt aufgrund der Fliehkraft aus den Lüftungsbohrungen 25 der Innenlamellen 23 radial nach außen aus und wird durch die Lüftungsschlitze 46, den Hohlraum 47 und die Lüftungskanäle 48 aus der Umfangsnut 49 angesaugt. Auf diese Weise wird auch eine zu hohe thermische Belastung der Fliehkraftkupplung 2 vermieden.

**Patentansprüche**

1. Verdichteraggregat mit einem Schraubenverdichter und einem Antriebsmotor, der mit dem Verdichter über eine automatische Kupplung antriebsverbunden ist, durch die die Antriebsverbindung mit dem Schraubenverdichter lösbar ist, dadurch gekennzeichnet, daß zur Regelung der Fördermenge des Schraubenverdichters durch zeitweises Stillsetzen des Verdichteraggregats (Aussetzregelung) der Antriebsmotor (1) ein abschaltbarer Elektromotor ist, der mit dem Schraubenverdichter (2) über eine an sich bekannte Fliehkraftkupplung (3) antriebsverbunden ist, die einen treibenden Kupplungsteil (17) und einen angetriebenen Kupplungsteil (18) aufweist, wobei zwischen den beiden Kupplungsteilen (17, 18) als Reibscheiben ausgebildete Lamellen (23, 28) nebeneinander angeordnet sind, von denen Innenlamellen (23) mit dem treibenden Kupplungsteil (17) und abwechselnd mit den Innenlamellen (23) angeordnete Außenlamellen (28) mit dem angetriebenen Kupplungsteil (18) mitdrehbar jedoch axial verschiebbar verbunden sind, und wobei eine Schaltkammer (21) vorgesehen ist, die eine gegen die Reibscheiben verschiebbare Druckscheibe (36) aufweist, die durch Fliehgewichte (34) in der Schaltkammer (21) gegen die Reibscheiben verstellbar ist.

2. Verdichteraggregat nach Anspruch 1, dadurch gekennzeichnet, daß die Druckscheibe (36) mit Rückzugfedern (40) versehen ist, die in Richtung von den Reibscheiben weg wirken.

3. Verdichteraggregat nach Anspruch 1 oder 2, dadurch gekennzeichnet, daß der Druckscheibe (36) eine mit dem treibenden Kupplungsteil (17) verbundene Innenlamelle (23) benachbart ist, die durch wenigstens eine koaxial zu den Reibscheiben angeordnete Ringfeder (41) gegen die Druckscheibe (36) gedrückt ist.

4. Verdichteraggregat nach Anspruch 3, dadurch gekennzeichnet, daß die Ringfeder (41) an einem in einer Ringnut (44) des treibenden Kupplungsteils (17) verankerten Sprengring (43) abgestützt ist.

5. Verdichteraggregat nach Anspruch 3 oder 4, dadurch gekennzeichnet, daß die Ringfeder (41) aus einem Federpaket aus gewölbten Federringen besteht.

6. Verdichteraggregat nach einem der Ansprüche 1 bis 5, dadurch gekennzeichnet, daß die Innenlamellen (23) mit axial durchgehenden Lüftungsschlitzen (46) versehen sind, von denen radiale Lüftungsbohrungen (45) nach außen geführt sind.

7. Verdichteraggregat nach Anspruch 6, dadurch gekennzeichnet, daß die Lüftungsschlitze (46) in den Innenlamellen (23) mit im angetriebenen Kupplungsteil (18) vorgesehenen Lüftungskanälen (48) in Verbindung stehen, die in kleinerem Radialabstand von der Rotationsachse der Fliehkraftkupplung (3) ins Freie münden als die radialen Lüftungsbohrungen (45) in den Innenlamellen (23).

**Claims**

1. A compressor unit having a screw-type compressor and a drive motor connected in a driving manner to the compressor by way of an automatic clutch by which the driving connexion to the screw-type compressor is disengageable, characterized in that, in order to regulate the delivered quantity of the screw-type compressor by stopping the compressor unit in a timed manner (interruption control) the drive motor (1) is a disconnectable electric motor connected in a driving manner to the screw-type compressor (2) by way of a centrifugal clutch (3) known per se comprising a driving part (17) and a driven part (18), while plates (23, 28) in the form of friction discs — of which inner plates (23) are connected jointly rotatably but axially displaceably to the driving clutch part (17) and outer plates (28) arranged alternately with the inner plates (23) are connected jointly rotatably but axially displaceably to the driven clutch part (18) — are arranged adjacent to one another between the two clutch parts (17, 18), an engagement chamber (21) being provided which comprises a thrust disc (36) displaceable against the friction discs and adjustable by centrifugal weights (34) in the engagement chamber (21) against the friction discs.

2. A compressor unit according to Claim 1, characterized in that the thrust disc (36) is provided with returning springs (40) which act in the direction away from the friction discs.

3. A compressor unit according to Claim 1 or 2, characterized in that the thrust disc (36) has adjacent to it an inner plate (23) connected to the driving clutch part (17) and pressed against the thrust disc (36) by at least one annular spring (41) arranged coaxially with the friction discs.

4. A compressor unit according to Claim 3, characterized in that the annular spring (41) is supported on a circlip (43) secured in an annular groove (44) of the driving clutch part (17).

5. A compressor unit according to Claim 3 or 4, characterized in that the annular spring (41) comprises a stack of dished spring rings.

6. A compressor unit according to any one of Claims 1 to 5, characterized in that the inner plates (23) are provided with axially extending venting slots (46) from which radial venting bores (45) lead to the outside.

7. A compressor unit according to Claim 6, characterized in that the venting slots (46) in the inner plates (23) are connected to venting ducts (48) provided in the driven clutch part (18) and opening to the outside at a shorter radial distance from the rotational axis of the centrifugal clutch (3) than the radial venting bores (45) in the inner plates (23).

**Revendications**

1. Groupe compresseur avec un compresseur à vis et un moteur d'entraînement qui est en liaison d'entraînement avec le compresseur par l'intermédiaire d'un embrayage automatique grâce auquel la liaison d'entraînement avec le compresseur à vis peut être interrompue, caractérisé en ce que, pour régler le débit de refoulement du compresseur à vis par arrêt temporaire du groupe compresseur (réglage intermittent) le moteur d'entraînement (1) est un moteur électrique qui peut être arrêté et qui est relié en entraînement au compresseur à vis (2) par l'intermédiaire d'un embrayage centrifuge (3) connu en soi qui présente une partie d'embrayage menante (17) et une partie d'embrayage menée (18) entre lesquelles sont disposés les uns à côté des autres des disques (23, 28) sous forme de disque de friction parmi lesquels les disques internes (23) sont reliés à la partie d'embrayage menante (17) de manière à pouvoir tourner avec celle-ci tout en étant déplaçables axialement et les disques externes (28) disposés en alternance avec les disques internes (23) sont reliés à la partie d'embrayage menée (18) de manière à pouvoir tourner avec celle-ci tout en étant déplaçables axialement, et dans lequel il est prévu une chambre d'embrayage (21) qui présente un disque de pression (36) qui peut coulisser contre les disques de friction et qui est déplaçable par des masselottes (34) dans la chambre d'embrayage (21) contre les disques de friction.

2. Groupe compresseur selon la revendication 1, caractérisé en ce que le disque de pression (36) est muni de ressorts de rappel (40) qui agissent dans la direction opposée aux disques de friction.

3. Groupe compresseur selon la revendication 1 ou 2, caractérisé en ce qu'à proximité du disque de pression (36) se trouve un disque interne (23), relié à la partie d'embrayage menante (17), qui est poussé contre le disque de pression (36) par au moins un ressort-bague (41) disposé coaxialement aux disques de friction.

4. Groupe compresseur selon la revendication 3, caractérisé en ce que le ressort-bague (41) s'appuie sur un jonc (43) ancré dans une rainure annulaire (44) de la partie d'embrayage menante (17).

5. Groupe compresseur selon la revendication 3 ou 4, caractérisé en ce que le ressort-bague (41) consiste en un groupe de ressorts constitué par des rondelles-ressorts bombées.

6. Groupe compresseur selon l'une des revendications 1 à 5, caractérisé en ce que les disques internes (23) sont munis de fentes d'aération (46) axialement traversantes desquelles partent vers l'extérieur des alésages d'aération radiaux (45).

7. Groupe compresseur selon la revendication 6, caractérisé en ce que les fentes d'aération (46) des disques internes (23) sont en communication avec des canaux d'aération (48) prévus dans la partie d'embrayage menée (18) qui débouchent à l'air libre à une distance radiale de l'axe de rotation de l'embrayage centrifuge (3) plut petite que les alésages d'aération radiaux (45) des disques internes (23).

FIG. 1

FIG. 3

FIG. 2